# EUROPEAN PATENT APPLICATION

(11) **EP 4 425 695 A1**
(43) Date of publication of application: **04.09.2024**
(21) Application number: 22942134.2
(22) Date of filing: 20.05.2022
(51) Int. Cl.: H01M 50/627, H01M 50/645

(54) **BATTERY END COVER ASSEMBLY, BATTERY CELL, BATTERY AND ELECTRIC DEVICE**

(71) Applicant: Contemporary Amperex Technology Co., Limited, Ningde, Fujian 352100 (CN)
(72) Inventor: SHANG, Zhitong, Ningde, Fujian 352100 (CN); CHEN, Congsheng, Ningde, Fujian 352100 (CN); YU, Mingxi, Ningde, Fujian 352100 (CN); WEN, Yaoling, Ningde, Fujian 352100 (CN); LIN, Wenfa, Ningde, Fujian 352100 (CN)
(74) Representative: Gong, Jinping
(86) International application number: PCT/CN2022/094135
(87) International publication number: WO 2023/221095

(57) **Abstract**

The present disclosure discloses a battery end cover assembly, a battery cell, a battery, and an electrical device. The battery end cover assembly (13) includes an end cover (20) having a liquid injection hole (21) penetrating along a first direction (z), the liquid injection hole (21) includes a first hole segment (211) and a second hole segment (212) divided along the first direction (z); the cross-sectional area of the first hole segment (211) is larger than the cross-sectional area of the second hole segment (212); a stepped surface (213) is formed between the first hole segment (211) and the second hole segment (212); and the stepped surface (213) includes a first inclined surface (213a) inclined toward the second hole segment (212) along the first direction (z).

## Description

### Technical Field

The present disclosure relates to the technical field of batteries, and in particular relates to a battery end cover assembly, a battery cell, a battery, and an electrical device.

### Background Art

With the advantages of high voltage, high specific energy, long cycle life, greenness, no pollution, wide range of operating temperature, low self-discharge, and the like, secondary batteries, especially lithium-ion batteries, are widely used in portable electronic devices and power equipment for large new energy electric vehicles, and are of great significance to solving environmental pollution and energy crises for humans. With widespread application of lithium-ion batteries, the long-term sealing reliability of batteries has become a problem that users pay close attention to.

### Summary of the Invention

In one aspect of the present disclosure, a battery end cover assembly is provided, including:
an end cover having a liquid injection hole penetrating along a first direction; wherein the liquid injection hole includes a first hole segment and a second hole segment divided along the first direction; the cross-sectional area of the first hole segment is larger than the cross-sectional area of the second hole segment; a stepped surface is formed between the first hole segment and the second hole segment; and the stepped surface includes a first inclined surface inclined toward the second hole segment along the first direction.

In this embodiment, the first inclined surface is formed on the stepped surface in the liquid injection hole, and may guide an electrolyte solution that enters the liquid injection hole during liquid injection to flow downward through the first inclined surface, thereby reducing or eliminating an electrolyte solution remaining in the liquid injection hole.

In some embodiments, the first inclined surface is a truncated conical surface.

The first inclined truncated conical surface may guide the electrolyte solution in 360 degrees, further reducing the electrolyte solution remaining in the liquid injection hole.

In some embodiments, the height of the first inclined surface in the first direction is L, the projection of the first inclined surface on a plane perpendicular to the first direction is a circular ring, the radial width of the circular ring is D, and the height L and the radial width D satisfy: 0.2≤D/L≤35.

The size of the radial width D affects the ratio of the first inclined surface to the stepped surface, thus affecting guidance of the electrolyte solution flow. In addition to affecting the ratio of the first inclined surface to the length of the second hole segment, thus affecting sealing of the second hole segment, the height L can, together with the radial width D, affect the degree of inclination of the first inclined surface, thus affecting guidance of the electrolyte solution flow.

In some embodiments, the height L and the radial width D satisfy: 0.5≤D/L≤3.5.

By setting the radial width D and the height L in an appropriate ratio, both the guidance of the electrolyte solution flow and the sealing of the second hole segment may be taken into account.

In some embodiments, the stepped surface further includes a planar segment perpendicular to the first direction, and the planar segment is on the outer side of the first inclined surface far from the second hole segment.

The planar segment may closely fit with a flat end surface of a liquid injection port of a liquid injection device during liquid injection, thereby avoiding air leakage during liquid injection under negative pressure.

In some embodiments, the area defined by the inner edge of the planar segment is configured to be larger than the area of a liquid outlet of a liquid injection nozzle, and the liquid injection nozzle is a liquid injection nozzle of a liquid injection device for injecting liquid into the liquid injection hole.

By locating the liquid outlet of the liquid injection nozzle in the first inclined surface during liquid injection, an electrolyte solution is prevented from remaining on the planar segment, thereby further preventing the electrolyte solution from remaining in the liquid injection hole.

In some embodiments, the battery end cover assembly further includes:
a first seal nail that is at least partly located in the second hole segment, and fits with the second hole segment in a sealed manner.

By arranging at least part of the first seal nail in the second hole segment, and making the first seal nail fit with the second hole segment in a sealed manner, the liquid injection hole is sealed with the first seal nail after liquid injection, thereby preventing the electrolyte solution from leaking outward through the liquid injection hole, and improving the use safety of the battery.

In some embodiments, the first seal nail includes a first segment and a second segment divided along the first direction; the second segment fits with the second hole segment in a sealed manner, the maximum cross-sectional area of the first segment is larger than the cross-sectional area of the second hole segment, and the first segment has a second inclined surface which is capable of closely fitting with the first inclined surface.

When the second segment of the first seal nail fits with the second hole segment in a sealed manner, the second inclined surface of the first segment of the first seal nail closely fits with the first inclined surface of the stepped surface, so that the first inclined surface achieves a sealing function on the corresponding area, and the sealing effect is further improved.

In some embodiments, the first seal nail further includes a third segment that is connected along the first direction to a side of the second segment far from the first segment, and the maximum cross-sectional area of the third segment is larger than the cross-sectional area of the second hole segment.

When the third segment of the first seal nail is inserted into the liquid injection hole along the first direction z and passes through the second hole segment, since the maximum cross-sectional area of the third segment of the first seal nail is larger than the cross-sectional area of the second hole segment, the first seal nail is restricted by the second hole segment and cannot easily come out along the direction opposite to the first direction z, so that the first seal nail may not be easily pushed out of the liquid injection hole by the air pressure inside the battery cell during battery use, thereby ensuring the sealing reliability.

In some embodiments, the third segment has a drum-shaped part adjacent to the second segment, and the maximum cross-sectional area of the third segment is the maximum cross-sectional area of the drum-shaped part.

An arc-shaped outer contour of the drum-shaped part of the third segment of the first seal nail is conducive to mold release during manufacturing, thereby achieving a higher yield and reducing production costs.

In some embodiments, the third segment further includes a conical or truncated conical part on the drum-shaped part far from the second segment, and the cross-sectional area of the conical or truncated conical part gradually decreases along the first direction.

The conical or truncated conical part of the first seal nail may guide the first seal nail to enter the liquid injection hole along the first direction more smoothly, thereby reducing the difficulty of assembly.

In some embodiments, the cross-sectional area of the second hole segment is larger than the cross-sectional area of an end surface on a side of the third segment far from the second segment.

Since the cross-sectional area of the end surface of the third segment is smaller than the cross-sectional area of the second hole segment, when the first seal nail is installed in the liquid injection hole, the third segment may pass through the second hole segment more easily, thereby reducing the installation difficulty.

In some embodiments, the cross-sectional area of the second hole segment is 1.05-1.5 times the cross-sectional area of the end surface on the side of the third segment far from the second segment.

By making the cross-sectional area of the second hole segment 1.05-1.5 times the cross-sectional area of the aforementioned end surface of the third segment, the end surface of the third segment may easily enter the second hole segment, and at the same time an installation guiding function is achieved by sliding the lateral contour of the third segment through the second hole segment.

In some embodiments, the angle β between the generatrix of the conical or truncated conical part and a plane perpendicular to the first direction satisfies: 30°≤β≤50°.

By setting an appropriate angle between the generatrix of the conical or truncated conical surface of the third segment of the first seal nail and the plane perpendicular to the first direction, both the difficulty of assembly and the space occupied by the third segment in the first direction may be taken into consideration.

In some embodiments, the battery end cover assembly further includes:
a second seal nail that is at least partly located in the first hole segment, and fits with the first hole segment in a sealed manner.

Through the seal fit between the second seal nail and the first hole segment, and the seal fit between the first seal nail and the second hole segment, the liquid injection hole is sealed twice, the sealing effect is greatly improved, and the risk of electrolyte solution leakage from the liquid injection hole is eliminated. Moreover, the first inclined surface is formed on the stepped surface in the liquid injection hole, and can guide the electrolyte solution entering the liquid injection hole to flow downward through the first inclined surface during liquid injection, thereby reducing or eliminating the electrolyte solution remaining in the liquid injection hole, reducing the risk of welding explosion caused by evaporation of the residual electrolyte solution heated when the second seal nail is welded, further improving the sealing performance and improving the safety of a battery cell.

In some embodiments, a first gap is formed between the end surface on a side of the first seal nail adjacent to the second seal nail and the second seal nail.

The first gap can provide an accommodating space and an expansion and deformation space for the first seal nail, and reduce the influence of expansion of the first seal nail on the second seal nail, thereby further improving the sealing reliability. The gap between the end surface of the first seal nail and the second seal nail may reduce heat transferred to the first seal nail when the second seal nail is welded, and reduce the risk of thermal failure or burn of the first seal nail, thereby improving the sealing reliability of the first seal nail and reducing quality problems in the manufacturing process. In addition, the gap can provide a buffer space for thermal evaporation of the electrolyte solution remaining between the first seal nail and the second seal nail, thereby reducing the risk of welding explosion caused by the evaporated electrolyte solution in the welding process of the second seal nail, and ensuring the welding quality.

In some embodiments, the value of the first gap is 0.3-0.6 mm.

An appropriate value of the first gap may reduce the risk of thermal failure or burn of the first seal nail, and at the same time, a battery end cover oversized in the first direction is unnecessary.

In some embodiments, a second gap is formed between the stepped surface and the second seal nail.

The second gap may provide a buffer space for thermal evaporation of the electrolyte solution remaining between the first seal nail and the second seal nail, thereby reducing the risk of welding explosion caused by the evaporated electrolyte solution in the welding process of the second seal nail, and ensuring the welding quality. In addition, the second gap may also prevent the second seal nail from interfering with the first seal nail during installation.

In some embodiments, the value of the second gap is 0.1-0.4 mm.

An appropriate value of the second gap may reduce the risk of welding explosion caused by the evaporated electrolyte solution in the welding process of the second seal nail, and at the same time, a battery end cover oversized in the first direction is unnecessary.

In some embodiments, the material of the first seal nail comprises rubber.

Due to the elasticity of rubber, the first seal nail may be more easily installed relative to the liquid injection hole, and the sealing requirements can be met. In addition, rubber can withstand relatively high temperatures and has certain corrosion resistance, thereby meeting the requirements for the battery end cover assembly during manufacture and use.

In some embodiments, the material of the second seal nail comprises metal.

The second seal nail containing metal may be welded to achieve more reliable fixed connection.

In some embodiments, the angle a between the inner wall of the first hole segment and a plane perpendicular to the first direction satisfies: 90°≤α≤130°.

The value of the angle α may affect installation and location of the second seal nail in the first hole segment, and may also limit the dimension occupied by the liquid injection hole on the end cover.

In some embodiments, the battery end cover assembly further includes:
a second seal nail that is at least partly located in the first hole segment, and fits with the first hole segment in a sealed manner,
wherein the second seal nail includes a plate-shaped cover, and the circumferential contour of the plate-shaped cover has a third inclined surface that fits with the inner wall of the first hole segment.

Through the seal fit between the second seal nail and the first hole segment, and the seal fit between the first seal nail and the second hole segment, the liquid injection hole is sealed twice, the sealing effect is greatly improved, and the risk of electrolyte solution leakage from the liquid injection hole is eliminated. Moreover, the second seal nail is located and fixed in the first hole segment through the third inclined surface, and the installation difficulty is reduced.

In some embodiments, the angle α satisfies: 95°≤α≤120°.

The second seal nail may be conveniently installed and located in the first hole segment by defining an appropriate angle α, and the space occupied by the liquid injection hole may be reduced.

In some embodiments, the battery end cover assembly further includes:
a second seal nail that is at least partly located in the first hole segment, and fits with the first hole segment in a sealed manner,
wherein the second seal nail includes a plate-shaped cover, the plate-shaped cover and the first hole segment are welded at the butting positions of the plate-shaped cover and the first hole segment, and the plate-shaped cover has a groove adjacent to the butting position.

Through the seal fit between the second seal nail and the first hole segment, and the seal fit between the first seal nail and the second hole segment, the liquid injection hole is sealed twice, the sealing effect is greatly improved, and the risk of electrolyte solution leakage from the liquid injection hole is eliminated. Furthermore, the groove adjacent to the butting position can be deformed during welding to relieve the stress caused by the welding.

In some embodiments, the weld seam between the plate-shaped cover and the first hole segment is circular, and the groove is located inside of the weld seam and is circular.

The circular weld seam may achieve a better sealing effect, and the circular groove adjacent to the circular weld seam may more evenly relieve the stress from the welding.

In some embodiments, the battery end cover assembly further includes:
a protective enclosure covering one end of the second hole segment far from the first hole segment, and having a first through hole.

Under negative pressure, the electrolyte solution first enters the protective enclosure from the liquid injection hole, and then enters the interior of a battery cell through the first through hole in the protective enclosure. The protective enclosure can buffer the electrolyte solution injected through the liquid injection hole, thereby preventing the electrolyte solution from quickly entering the interior of the battery cell and causing impact on an electrode assembly.

In some embodiments, the protective enclosure is fixedly connected to a surface of a side of the end cover far from the first hole segment. Such a structure occupies less space.

In some embodiments, the battery end cover assembly further includes:
an insulating plate located on the front side of the end cover along the first direction, and having a second through hole that at least partly coincides with the liquid injection hole.

The protective enclosure is fixedly connected to or integrally formed with the insulating plate, and is located on a surface of a side of the insulating plate far from the second seal nail.

The insulating plate can isolate the top cover from tabs of the electrode assembly, thereby avoiding problems such as electric leakage caused by the tabs being directly electrically connected to the end cover. For a protective enclosure and an insulating plate that are integrally formed, they may be made of the same insulating material, so as to facilitate molding and processing. In addition, the integrally formed structure can ensure the connection strength, so as to prevent the protective enclosure from being collided by the electrode assembly and causing connection failure between the protective enclosure and the insulating plate.

In some embodiments, the protective enclosure includes a surrounding edge and a bottom plate, the surrounding edge and the bottom plate together enclose a space on a side of the second hole segment far from the first hole segment, and the bottom plate has a plurality of first through holes.

The space enclosed by the surrounding edge and the bottom plate may protect the first seal nail part and prevent the first seal nail from falling into the battery cell, and the plurality of first through holes in the bottom plate can disperse the electrolyte solution during liquid injection, thereby reducing the impact on the electrode assembly and allowing the electrolyte solution to enter the electrode assembly more smoothly.

In one aspect of the present disclosure, a battery cell is provided, including:
a case having a cavity and an end opening communicated with the cavity;
an electrode assembly, located in the cavity; and
the battery end cover assembly, arranged at the end opening.

The battery cell using the battery end cover assembly of the aforementioned embodiment may achieve better safety performance.

In one aspect of the present disclosure, a battery includes the aforementioned battery cell.

The battery using the battery cell of the aforementioned embodiment may achieve better safety performance.

In one aspect of the present disclosure, an electrical device is provided, including the aforementioned battery.

The electrical device using the battery of the aforementioned embodiment may achieve better safety performance.

### Description of Drawings

In order to illustrate the technical solutions of the embodiments of the present disclosure more clearly, the following briefly introduces the figures required in the embodiments of the present disclosure. Obviously, the figures described below are only some embodiments of the present disclosure. For those of ordinary skill in the art, other figures may also be obtained according to the figures without any creative effort.

The present disclosure may be more clearly understood from the following detailed description with reference to the accompanying figures, wherein
FIG. 1 is a schematic structural view of an electrical device according to some embodiments of the present disclosure;
FIG. 2 is an exploded schematic view of a battery according to some embodiments of the present disclosure;
FIG. 3 is an exploded schematic view of a battery cell according to some embodiments of the present disclosure;
FIG. 4 is a cross-sectional schematic view of the installation structure of a battery end cover assembly according to some embodiments of the present disclosure;
FIG. 5 is an exploded schematic view of FIG. 4;
FIG. 6 is a cross-sectional schematic view of the installation structure of a battery end cover assembly according to other embodiments of the present disclosure;
FIG. 7 is an exploded schematic view of a battery end cover assembly according to still other embodiments of the present disclosure; and
FIG. 8 is a cross-sectional schematic view of FIG. 7.

It should be understood that the dimensions of the various parts shown in the figures are not drawn according to the actual scale relationship. In addition, the same or similar reference numerals denote the same or similar parts.

### Description of reference numerals:

10: battery cell; 11: case; 12: electrode assembly; 13: battery end cover assembly; 14: terminal post; 15: connecting element; 111: end opening;
20: end cover; 21: liquid injection hole; 211: first hole segment; 212: second hole segment; 213: stepped surface; 213a: first inclined surface; 213b: planar segment;
30: first seal nail; 31: first segment; 32: second segment; 33: third segment; 311: second inclined surface; 331: drum-shaped part; 332: truncated conical part;
40: second seal nail; 41: plate-shaped cover; 42: third inclined surface; 43: groove; 44: butting position;
50: protective enclosure; 51: first through hole; 52: insulating plate; 53: second through hole;
60: battery; 61: box;
70: vehicle; 71: controller; 72: motor; 73: axle; and 74: wheel.

### Detailed Description

The implementations of the present disclosure are further described in detail below with reference to the figures and embodiments. The following detailed description of the embodiments and the figures are intended to illustrate the principles of the present disclosure, but not to limit the scope of the present disclosure, that is, the present disclosure is not limited to the described embodiments.

In the description of the present disclosure, it should be noted that, unless otherwise stated, "a plurality of" means two or more; the orientation or positional relationships indicated by the terms "upper", "lower", "left", "right", "inner" and "outer" are only for facilitating the description of the present disclosure and simplifying the description, rather than indicating or implying that the apparatus or element referred to must have a particular orientation or be constructed and operated in a particular orientation, and therefore will not be interpreted as limiting the present disclosure. In addition, the terms "first", "second" and "third" are used for descriptive purposes only, and cannot be construed as indicating or implying relative importance. "Perpendicular to" is not strictly "perpendicular to", but within an allowable range of errors. "Parallel to" is not strictly "parallel to", but within an allowable range of errors.

The orientation terms appearing in the following description indicate the directions shown in the figures, and do not limit the specific structure of the present disclosure. In the description of the present disclosure, unless otherwise explicitly specified or defined, it should be noted that the terms "installation", "connect" and "connection" should be understood in a broad sense, for example, a connection may be a fixed connection, a detachable connection, or an integrated connection, and may be a direct connection or an indirect connection through an intermediate medium. For those of ordinary skill in the art, the specific meanings of the above terms in the present disclosure may be understood according to specific circumstances.

The following will provide a detailed explanation of some embodiments of the present invention in conjunction with the accompanying figures. It should be noted that in case of no conflicts, the features of the following embodiments can be combined with each other.

An electrolyte solution is an ion-conducting carrier in lithium-ion batteries. In a battery manufacturing process, to facilitate injection of an electrolyte solution into a battery, a liquid injection hole penetrating from top to bottom is usually formed in a battery top cover. After the electrolyte solution is injected, the liquid injection hole needs to be sealed once with a rubber seal nail. If the rubber seal nail is assembled obliquely or worn out due to long-term use, liquid leakage may occur, further leading to some safety problems, such as performance degradation of a battery, and battery corrosion caused by the liquid leakage.

In some related technologies, after primary sealing is performed on the liquid injection hole with a rubber seal nail, secondary sealing is still required for the liquid injection hole with an aluminum seal nail. Regarding the liquid leakage phenomenon in a two-stage sealing structure, the inventor found after research that the occurrence of the liquid leakage phenomenon is related to various factors, such as the sealing structure, the material of seal nails, and the assembly process of the seal nails.

For example, in the related technologies, a liquid injection hole usually uses a stepped design, and an electrolyte solution is likely to remain after liquid injection. Also, a cleaning dead angle in the related technologies makes it difficult to effectively remove the electrolyte solution from the liquid injection hole. The residual electrolyte solution is likely to cause pollution to a battery cell, and may cause corrosion or influence on the welding performance. When secondary sealing with an aluminum seal nail is performed by laser welding, the residual electrolyte solution may be evaporated due to the heat of welding, resulting in exhaust gas with a certain pressure. If the exhaust gas rushes out of a molten pool, problems such as pinholes, explosion points and cracks on the weld seam may be caused, resulting in quality decrease or failure of the secondary sealing, and further affecting the safety of the battery cell. In addition, when laser welding is performed, if the molten pool of the seal structure is close to the rubber seal nail, the rubber seal nail is likely to be burnt or evaporated, resulting in quality decrease or failure of the primary sealing, and further resulting in battery leakage.

In view of this, the embodiments of the present disclosure provide a battery end cover assembly, a battery cell, a battery and an electrical device, which can reduce or eliminate an electrolyte solution remaining in a liquid injection hole.

The battery end cover assembly according to the embodiments of the present disclosure may be applied to various types of battery cells. The battery cells may include lithium-ion secondary batteries, lithium-ion primary batteries, lithium-sulfur batteries, sodium/lithium-ion batteries, sodium-ion batteries, magnesium-ion batteries, or the like, which is not limited in the embodiments of the present disclosure. The battery cells may be cylindrical, flat, rectangular, or in other shapes, which is not limited in the embodiments of the present disclosure.

The battery cell according to the embodiments of the present disclosure may be applied to various types of batteries. The batteries may be used for supplying power for electrical devices such as vehicles, for example, supplying power for vehicle control or power for driving. The batteries may include cases and battery modules, the cases are used for providing an accommodating space for the battery modules, and the battery modules are installed in the cases. The cases may be made of metal. The battery modules may include a plurality of battery cells connected in series, in parallel, or in parallel-series connection. A battery cell is the smallest unit in a battery. A battery cell includes an electrode assembly in which an electrochemical reaction can occur.

The battery according to the embodiments of the present disclosure may be applied to various electrical devices using batteries. The electrical devices may be mobile phones, portable devices, laptops, battery vehicle, electric vehicles, ships, spacecrafts, electric toys, electric tools and the like. For example, the spacecrafts include airplanes, rockets, space shuttles, spaceships and the like; the electric toys include fixed or mobile electric toys, such as game consoles, electric vehicle toys, electric ship toys, electric airplane toys and the like; and the electric tools include metal-cutting electric tools, grinding electric tools, assembly electric tools and electric tools for railways, such as electric drills, electric grinders, electric wrenches, electric screwdrivers, electric hammers, electric impact drills, concrete vibrators and electric planers. The electrical devices are not specially limited in the embodiments of the present disclosure.

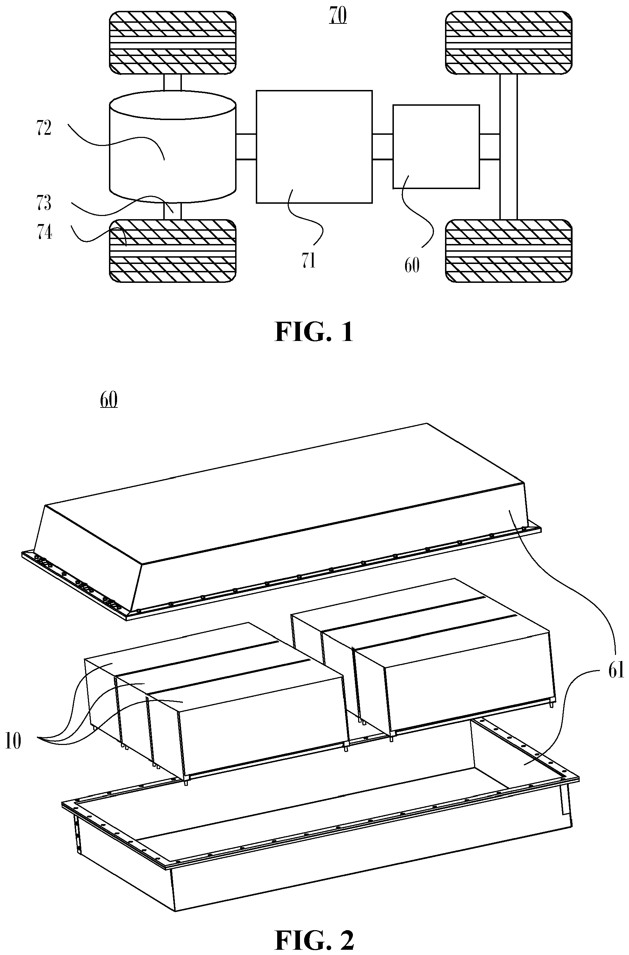

FIG. 1 is a schematic structural view of an electrical device according to some embodiments of the present disclosure. For the convenience of description, an electrical apparatus being a vehicle is taken as an example. The vehicle 70 may be a fuel vehicle, a gas vehicle, or a new energy vehicle, and the new energy vehicle may be a all-electric vehicle, a hybrid electric vehicle, or the like. A battery 60 may be arranged at the bottom, or head, or tail of the vehicle 70.

The battery 60 may be used for supplying power for the vehicle 70, for example, the battery 60 may be used as an operational power supply for the vehicle 70, and used in a circuit system of the vehicle 70, for example, to meet the working power demand during the start-up, navigation and operation of the vehicle 70. The battery 60 not only may be used as the operating power supply for the vehicle 70, but also may be used as a driving power supply for the vehicle 70 to provide driving power for the vehicle 70 in place of or partially in place of fuel or natural gas.

Axles 73, wheels 74, a motor 72 and a controller 71 may also be arranged in the vehicle 70, and the controller 71 is used for controlling the battery 60 to supply power for the motor 72, for example, when the vehicle 70 uses the battery 60 as the driving power supply, the controller 71 may provide power required for constant speed driving and accelerated driving for the motor 72. The motor 72 is used for driving the axles 73 to rotate, thereby driving the wheels 73 to rotate.

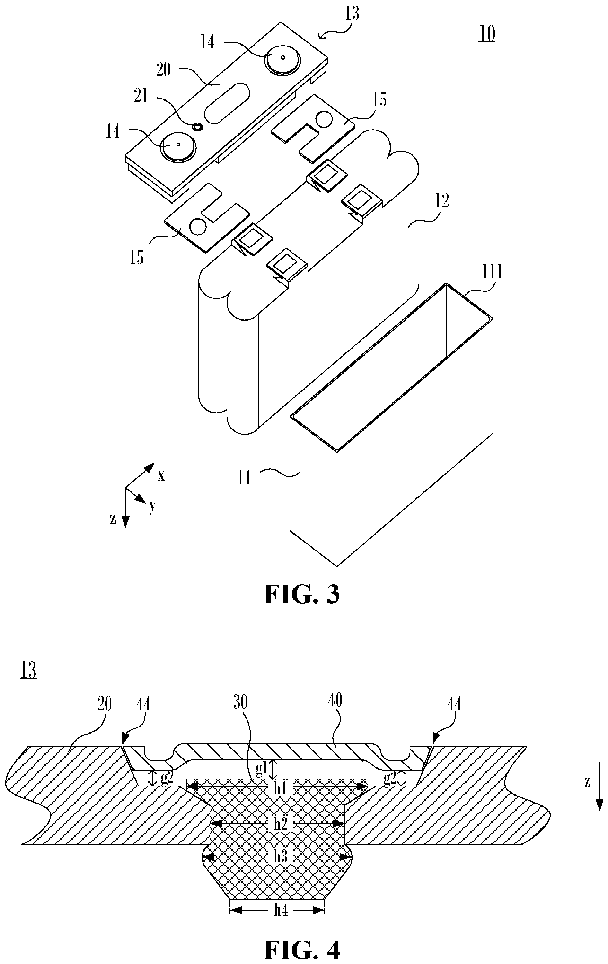

FIG. 2 is a schematic structural view of a battery according to some embodiments of the present disclosure. FIG. 3 is an exploded schematic view of a battery cell according to some embodiments of the present disclosure. Referring to FIG. 2, in some embodiments, the battery 60 includes a box 61 and one or more battery cells 10 arranged in the box 61. The box 61 may have cooling, sealing and anti-collision functions for the battery cells 10, and also can prevent liquid or other foreign matter from adversely affecting the charging and discharging or safety of the battery cells.

Referring to FIG. 2 and FIG. 3, the battery cells 10 are electrically connected, e.g., in series, or in parallel, or in parallel-series connection, so as to achieve the required electrical performance parameters by the battery 60. A plurality of battery cells 60 are arranged in a row, and one or more rows of battery cells 10 may be arranged in the box as required.

In some embodiments, the battery cells 10 of the battery 60 may be arranged along at least one of the length direction and the width direction of the box. At least one row or column of battery cells 60 may be arranged according to actual needs. Also, one or more layers of battery cells 10 may be arranged along the height direction of the battery 60 as required.

In some embodiments, the plurality of battery cells 10 may be connected in series, or in parallel, or in parallel-series connection to form battery modules, and then the plurality of battery modules may be connected in series, or in parallel, or in parallel-series connection to form a whole to be accommodated in the box 61. In other embodiments, all the battery cells 10 may be directly connected in series, or in parallel, or in parallel-series connection together, and then the whole formed by all the battery cells 10 may be accommodated in the box.

In FIG. 3, the battery cell 10 includes a case 11, an electrode assembly 12 and a battery end cover assembly 13. An electrolyte solution is also included in the battery cell 10. The case 11 has a cavity and an end opening 111 communicating with the cavity, and the cavity is used for accommodating the electrode assembly 12. The shape of the case 11 is determined based on the shape of one or more electrode assemblies 12, and the case 11 may be a hollow cuboid, a hollow cube, or a hollow cylinder. The case 11 may be made of a conductive metal material or plastic, and optionally, the case 11 is made of aluminum or aluminum alloy.

The battery end cover assembly 13 is arranged on the end opening 111 to form a closed cavity with the case 11 for accommodating the electrode assembly 12. The battery end cover assembly 13 may include two terminal posts 14 opposite in polarity, and the two terminal posts 14 are electrically connected to tabs on electrode plates with the corresponding polarities in the electrode assembly 12 respectively through the connecting assembly 15 or directly.

In FIG. 3, a first direction z (i.e., z-direction) is the direction in which the electrolyte solution is injected into the battery cell, and the mutually perpendicular second direction x (i.e., x-direction) and third direction y (i.e., y-direction) are both perpendicular to the z direction. In some embodiments, the x-direction, y-direction and z-direction may be the width direction, thickness direction and height direction of the battery cell, respectively.

The electrode assembly may include a positive electrode plate, a negative electrode plate and a separator therebetween. The battery cell operates mainly through movement of metal ions inside between the positive electrode plate and the negative electrode plate.

The positive electrode plate includes a positive electrode current collector and a positive electrode active material layer. A positive tab is connected with or formed on the positive electrode current collector. Taking a lithium-ion battery as an example, the material of the positive electrode current collector may be aluminum, and a positive electrode active material may be lithium compounds that can provide lithium ions such as lithium cobalt oxide, lithium iron phosphate, ternary lithium or lithium manganate. In a case that the positive electrode current collector and the positive electrode active material layer are bonded using a bonding substance, the bonding substance may be PVDF (Polyvinylidene Fluoride) or the like.

The negative electrode plate includes a negative electrode current collector and a negative electrode active material layer. A negative tab is connected with or formed on the negative electrode current collector. Taking the lithium-ion battery as an example, the material of the negative electrode current collector may be copper, and a negative electrode active material may be graphite, silicon, lithium titanate and other materials that can store lithium ions. In a case that the negative electrode current collector and the negative electrode active material layer are bonded using a bonding substance, the bonding substance may be carboxymethyl cellulose, epoxy resin, styrene-butadiene rubber, or the like.

The separator may be made from PP (polypropylene), PE (polyethylene), or the like. The electrolyte solution includes electrolytes and a solvent. The electrolytes include organic metal salts, inorganic salts, or the like, which may provide metal ions that shuttle between the positive electrode plate and the negative electrode plate. To ensure a sufficient overcurrent capacity, a plurality of positive tabs may be laminated together, and a plurality of negative tabs may be laminated together. In addition, the electrode assembly may be a wound structure or a stacked structure, which is not limited in the embodiments of the present disclosure.

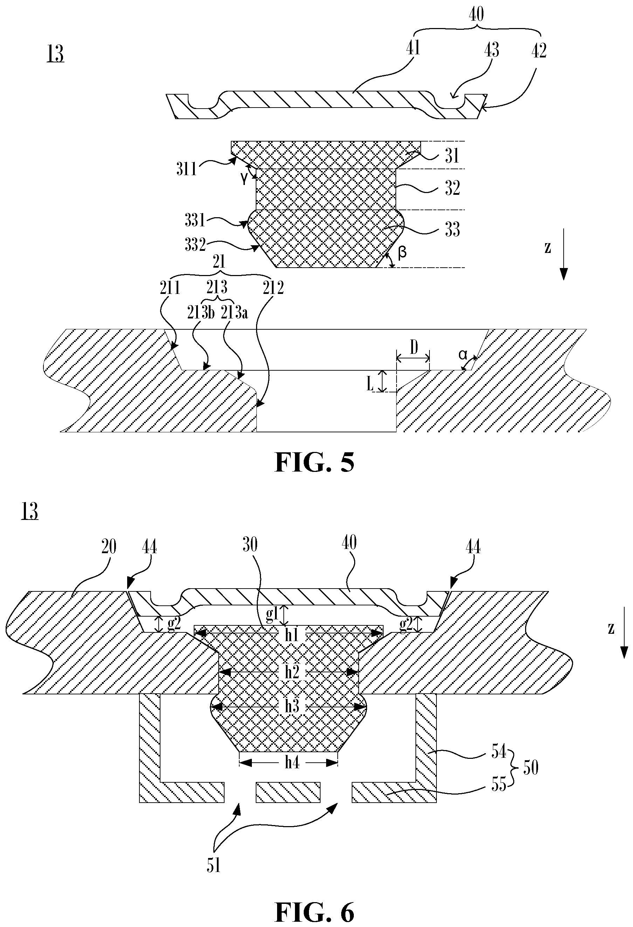

FIG. 4 is a cross-sectional schematic view of the installation structure of a battery end cover assembly according to some embodiments of the present disclosure. FIG. 5 is an exploded schematic view of FIG. 4. Referring to FIG. 4 and FIG. 5, an embodiment of the present disclosure provides a battery end cover assembly 13. The assembly includes an end cover 20. The end cover 20 has a liquid injection hole 21 penetrating along a first direction z. The end cover 20 may be a metal plate, e.g., a copper plate, an iron plate, an aluminum plate, a steel plate or an alloy plate. The liquid injection hole 21 is used for providing a channel for injecting the electrolyte solution into the battery cell 10.

The liquid injection hole 21 includes a first hole segment 211 and a second hole segment 212 divided along the first direction z. The cross-sectional area of the first hole segment 211 is larger than the cross-sectional area of the second hole segment 212, a stepped surface 213 is formed between the first hole segment 211 and the second hole segment 212, and the stepped surface 213 includes a first inclined surface 213a inclined toward the second hole segment 212 along the first direction z.

The first direction z may be the liquid injection direction of the liquid injection hole 21, or may be the thickness direction of the end cover 20. The cross sections of the first hole segment 211 and the second hole segment 212 may be circular, rectangular, square or other shapes. The shapes of the cross sections may be the same or different. All the cross sections as described here and below may be cross sections perpendicular to the first direction z.

In this embodiment, the first inclined surface 213a is formed on the stepped surface 213 in the liquid injection hole 21, and the electrolyte solution that enters the liquid injection hole 21 may be guided by gravity to flow downward through the first inclined surface 213a, so that the electrolyte solution in the first hole segment 211 and on the stepped surface 213 flows into the second hole segment 212 more smoothly, and then flows into the electrode assembly 12, thereby reducing or eliminating the electrolyte solution remaining in the liquid injection hole 21. In this way, the pollution of the electrolyte solution to the battery cell may be effectively reduced.

To reduce the residual electrolyte solution more thoroughly, the first inclined surface 213a in FIG. 5 may be a truncated conical surface. The truncated conical surface may guide the electrolyte solution in 360 degrees, further reducing the electrolyte solution remaining in the liquid injection hole 21. In other embodiments, the first inclined surface 213a may also be arranged in segments, for example, the first inclined surface 213a includes a plurality of inclined surface segments arranged at equal or unequal intervals along the circumferential direction of the second hole segment 212.

Along the first direction z, the area of the cross section (that is, the cross section perpendicular to the first direction z) of the space enclosed by the first inclined surface 213a gradually decreases, which facilitates more electrolyte solution to be guided to the second hole segment 212 through the first inclined surface 213a, and enter the electrode assembly 12 from the second hole segment 212.

Referring to FIG. 5, In some embodiments, the height of the first inclined surface 213a in the first direction z is L, the projection of the first inclined surface 213a on a plane perpendicular to the first direction z is a circular ring, the radial width of the circular ring is D, and the height Land the radial width D satisfy: 0.2≤D/L≤35.

The radial width D affects the ratio of the first inclined surface 213a to the stepped surface 213, thus affecting guidance of the electrolyte solution flow. The ratio of the first inclined surface 213a to the length of the second hole segment 212 is affected by the height L, thus affecting sealing of the second hole segment 212. Moreover, the degree of inclination of the first inclined surface 213a is affected by the height L and the radial width D, thus affecting guidance of the electrolyte solution flow.

In some embodiments, the height L and the radial width D satisfy: 0.5≤D/L≤3.5, optionally, D/L=8/5. By setting the radial width D and the height L in an appropriate ratio, both the guidance of the electrolyte solution flow and the sealing of the second hole segment 212 may be taken into account.

Considering that during liquid injection, the stepped surface in the liquid injection hole usually abuts against a liquid injection nozzle of a liquid injection device, and the commonly used liquid injection nozzle includes a flat end surface for location, in FIG. 5, the stepped surface 213 further includes a planar segment 213b perpendicular to the first direction z, and the planar segment 213b is on the outer side of the first inclined surface 213a far from the second hole segment 212. In this way, the planar segment 213b may closely fit with the flat end surface of the liquid injection nozzle during liquid injection to realize location, thereby avoiding air leakage during liquid injection under negative pressure. Moreover, this structure does not require a liquid injection nozzle of a special structure.

In some embodiments, the area defined by the inner edge of the planar segment 213b may be configured to be larger than the area of a liquid outlet (liquid outlet area) of the liquid injection nozzle, so that the liquid outlet of the liquid injection nozzle is located in the first inclined surface 213a during liquid injection, and an electrolyte solution is prevented from remaining on the planar segment 213b, thereby further preventing the electrolyte solution from remaining in the liquid injection hole.

Referring to FIG. 4 and FIG. 5, In some embodiments, the battery end cover assembly 13 further includes a first seal nail 30, the first seal nail 30 is at least partly located in the second hole segment 212, and fits with the second hole segment 212 in a sealed manner. By arranging at least part of the first seal nail in the second hole segment, and making the first seal nail fit with the second hole segment in a sealed manner, the liquid injection hole is sealed with the first seal nail after liquid injection, thereby preventing the electrolyte solution from leaking outward through the liquid injection hole, and improving the use safety of the battery.

In some embodiments, the battery end cover assembly 13 further includes a second seal nail 40. The second seal nail 40 is at least partly located in the first hole segment 211, and fits with the first hole segment 211 in a sealed manner. The first seal nail 30 and the second seal nail 40 fit with the first hole segment 211 and the second hole segment 212 of liquid injection hole 21 in a sealed manner respectively, so that the liquid injection hole 21 is sealed twice. Through two-stage sealing, impurities outside the battery cannot enter the interior of the battery cell, and the electrolyte solution inside the battery cell is also prevented from leaking out of the battery cell.

In addition, the risk of welding explosion caused by evaporation of the residual electrolyte solution heated when the second seal nail 40 is welded is reduced, the sealing performance is further improved and the safety of the battery cell 10 is improved.

Referring to FIG. 4 and FIG. 5, in some embodiments, the first seal nail 30 includes a first segment 31 and a second segment 32 divided along the first direction z. The second segment 32 fits with the second hole segment 212 in a sealed manner, the maximum cross-sectional area of the first segment 31 is larger than the cross-sectional area of the second hole segment 212, and the first segment 31 has a second inclined surface 311 which is capable of closely fitting with the first inclined surface 213a. By making the maximum cross-sectional area of the first segment 31 of the first seal nail 30 larger than the cross-sectional area of the second hole segment 212, the first seal nail 30 may not fall into the battery cell.

In FIG. 4, referring to the two cross-sections of the first segment 31 and the second hole segment 212, the lateral dimension h1 (which may be the diameter) of the first segment 31 is the maximum lateral dimension of all the cross-sections of the first segment 31, and corresponds to the maximum cross-sectional area. The second hole segment 212 is cylindrical with equal cross-sections, and the lateral dimension h2 (which may be the diameter) thereof is equal in the first direction z, and corresponds to the cross-sectional area of the second hole segment 212. It can be seen from the figure that h1 is greater than h2, for example, h1=4 mm, h2=3.6 mm, which corresponds to the relationship that the maximum cross-sectional area of the first segment 31 is larger than the cross-sectional area of the second hole segment 212.

When the second segment 32 of the first seal nail 30 fits with the second hole segment 212 in a sealed manner, the second inclined surface 311 of the first segment 31 of the first seal nail 30 closely fits with the first inclined surface 213a of the stepped surface 213, so that the first inclined surface 213a achieves an auxiliary sealing function on the corresponding area, and the sealing effect is further improved.

Here, the space enclosed by the first inclined surface 213a is in the shape of a solid of revolution, and the generatrix of the solid of revolution may be a straight line, a convex arc relative to the central axis, or a concave arc relative to the central axis. The contour of the second inclined surface 311 is adapted to the first inclined surface 213a to ensure a tight fit.

In FIG. 4 and FIG. 5, the first seal nail 30 may further include a third segment 33 that is connected along the first direction z to a side of the second segment 32 far from the first segment 31, and the maximum cross-sectional area of the third segment 33 is larger than the cross-sectional area of the second hole segment 212. Since the maximum cross-sectional area of the third segment 33 is larger than the cross-sectional area of the second hole segment 212, when the second segment 32 of the first seal nail 30 fits with the second hole segment 212 in a sealed manner, the first seal nail 30 is restricted by the third segment 33 and may not come out of the liquid injection hole along the direction opposite to the first direction z. In this way, during use of the battery, a gas generated in the battery cell may not push the first seal nail 30 out of the liquid injection hole, thereby ensuring the sealing reliability of the liquid injection hole.

In FIG. 5, the third segment 33 may have a drum-shaped part 331 adjacent to the second segment 32, and the maximum cross-sectional area of the third segment 33 is the maximum cross-sectional area of the drum-shaped part 331. In this way, the first seal nail 30 has a dumbbell shape as a whole, that is, in a structure with a thinner middle part and thicker ends. In FIG. 4, the lateral dimension corresponding to the cross-section of the drum-shaped part 331 is h3 (which may be the diameter). As can be seen from the figure, h3 is greater than h2, for example, h3=3.7 mm, h2=3.6 mm, which corresponds to that the maximum cross-sectional area of the drum-shaped part 331 is larger than the cross-sectional area of the second hole segment 212.

Compared with structures of other shapes for limiting detachment of the first seal nail 30, the arc-shaped outer contour of the drum-shaped part 331 is conducive to mold release during manufacturing, so as to achieve a higher yield and reduce production costs.

Considering that the maximum cross-sectional area of the drum-shaped part 331 is larger than the cross-sectional area of the second hole segment 212, in order to facilitate the first seal nail to pass through the second hole segment 212 more smoothly during installation, referring to FIG. 5, in some embodiments, the third segment 33 further includes a conical or truncated conical part 332 on the drum-shaped part 331 far from the second segment 32.

In FIG. 4, the cross-sectional area of the conical or truncated conical part 332 gradually decreases along the first direction z. The lateral dimension of the end surface of the truncated conical part 332 farthest from the first segment 31 is h4 (which may be the diameter). It can be seen from the figure that h4 is smaller than h3, for example, h4=2.4 mm, h3=3.7 mm, which corresponds to that the minimum cross-sectional area of the truncated conical part 332 (that is, the cross-sectional area of the end surface on a side of the third segment 33 far from the second segment 32) is smaller than the maximum cross-sectional area of the drum-shaped part 331.

The cross-sectional area of the second hole segment 212 is larger than the cross-sectional area of an end surface on a side of the third segment 33 far from the second segment 32, so that the third segment may pass through the second hole segment more easily, thereby reducing the installation difficulty. Optionally, the cross-sectional area of the second hole segment 212 is 1.05-1.5 times the cross-sectional area of the end surface on a side of the third segment 33 far from the second segment 32, so that the end surface of the third segment may easily enter the second hole segment, and at the same time an installation guiding function is achieved by sliding the lateral contour of the third segment through the second hole segment.

When the first seal nail is installed, the end surface on a side of the third segment 33 far from the second segment 32 can more easily enter and pass through the second hole segment 212 due to a smaller cross-sectional area. Moreover, the conical surface of the conical or truncated conical part 332 may guide the movement of the first seal nail in the first direction z more smoothly, thereby effectively reducing the difficulty of assembly.

In FIG. 5, the angle β between the generatrix of the conical or truncated conical part 332 and a plane perpendicular to the first direction z satisfies: 30°≤β≤50°, optionally, β=40°. If the angle β is too large, the conical or truncated conical part 332 may be affected when passing through the second hole segment 212, and the difficulty of assembly may be increased. In addition, if the angle β is too large, the conical or truncated conical part 332 may be too long in the first direction z, and occupy too much space in the battery. If the angle β is too small, a limited guiding function may be achieved, and also the difficulty of assembly may be increased. By setting an appropriate angle between the generatrix of the conical or truncated conical surface of the third segment 33 of the first seal nail 30 and the plane perpendicular to the first direction z, both the difficulty of assembly and the space occupied by the third segment 33 in the first direction z may be taken into consideration.

In some embodiments, the material of the first seal nail 30 comprises rubber, e.g., fluororubber, ethylene-propylene terpolymer (EPT), or other corrosion-resistant rubbers. Due to the elasticity of rubber, the first seal nail 30 may be installed relative to the liquid injection hole 21 more conveniently and meet the sealing requirements. Correspondingly, the first seal nail 30 may be of a solid structure, and the sectional dimension of the second segment may be slightly larger than the sectional dimension of the second hole segment, for example, greater than 0.1-0.3 mm, so that the second segment and the second hole segment may achieve interference fit through elastic deformation and improve the sealing effect. In addition, rubber can withstand relatively high temperatures and has certain corrosion resistance, thereby meeting the requirements for the battery end cover assembly 13 during manufacture and use.

In some embodiments, the material of the second seal nail 40 comprises metal. The second seal nail may be a metal nail, e.g., a copper nail, an iron nail, an aluminum nail, a steel nail or an alloy nail. The second seal nail 40 containing metal may be welded to achieve more reliable fixed connection. Such material may be welded to a case made of metal by a laser welding technology, and secondary sealing with the second seal nail may be achieved through a weld seam.

If the electrolyte solution remains in the injection hole, the electrolyte solution may be evaporated by the heat during laser welding and generate exhaust gas. Referring to FIG. 4, in some embodiments, a first gap g1 is formed between the end surface on a side of the first seal nail 30 adjacent to the second seal nail 40 and the second seal nail 40. The first gap g1 can provide an accommodating space and an expansion and deformation space for the first seal nail 30, and reduce the influence of expansion of the first seal nail 30 on the second seal nail 40, thereby further improving the sealing reliability.

Here, the first gap g1 may be the minimum gap between the end surface on a side of the first seal nail 30 adjacent to the second seal nail 40 and the second seal nail 40, or the average gap between the end surface on a side of the first seal nail 30 adjacent to the second seal nail 40 and the second seal nail 40. In FIG. 4, if the end surface is parallel to the end surface of the second seal nail 40, the first gap g1 is the minimum gap as well as the average gap.

When a gap is formed between the end surface of the first seal nail 30 and the second seal nail 40, heat cannot be directly transferred to the first seal nail 30 by heat conduction when the second seal nail 40 is welded, thereby reducing the risk of thermal failure or burn of the first seal nail 30, improving the sealing reliability of the first seal nail 30 and reducing quality problems in the manufacturing process. In addition, the gap can provide a buffer space for thermal evaporation of the electrolyte solution remaining between the first seal nail 30 and the second seal nail 40, thereby reducing the risk of welding explosion caused by the evaporated electrolyte solution in the welding process of the second seal nail 40, and ensuring the welding quality.

Optionally, the value of the first gap g1 is 0.3-0.6 mm. An appropriate value of the first gap g1 may reduce the risk of thermal failure or burn of the first seal nail 30, and at the same time, a battery end cover 20 oversized in the first direction z is unnecessary.

Still referring to FIG. 4, in some embodiments, a second gap g2 is formed between the stepped surface 213 and the second seal nail 40. Here, the second gap g2 may be the minimum gap between the stepped surface 213 and the second seal nail 40, or may be the average gap between the stepped surface 213 and the second seal nail 40. In FIG. 4, if the stepped surface 213 is parallel to the surface of a part of the second seal nail 40 opposite to the stepped surface, the second gap g2 is the minimum gap as well as the average gap.

The second gap g2 may provide a buffer space for thermal evaporation of the electrolyte solution remaining between the first seal nail 30 and the second seal nail 40, thereby reducing the risk of welding explosion caused by the evaporated electrolyte solution in the welding process of the second seal nail 40, and ensuring the welding quality. In addition, the second gap g2 may also prevent the second seal nail 40 from interfering with the first seal nail 30 during installation.

Optionally, the value of the second gap g2 is 0.1-0.4 mm. An appropriate value of the second gap g2 may reduce the risk of welding explosion caused by the evaporated electrolyte solution in the welding process of the second seal nail 40, and at the same time, a battery end cover 20 oversized in the first direction z is unnecessary.

In some embodiments, the second gap g2 may be smaller than the first gap g1, the heat transferred to the first seal nail 30 during welding may be reduced through a larger first gap g1 to reduce the risk of the first seal nail being burned, and a smaller second gap g2 may allow the corresponding part of the second seal nail to be provided with a stress relief structure.

The first hole segment 211 may be configured as a constant-section hole segment. In other embodiments, the first hole segment 211 may be configured as a hole segment that tapers along the first direction z, e.g., an inner tapered hole segment. Referring to FIG. 5, in some embodiments, the angle α between the inner wall of the first hole segment 211 and a plane perpendicular to the first direction z satisfies: 90°≤α≤130°. The value of the angle α may affect installation and location of the second seal nail 40 in the first hole segment 211, and may also limit the dimension occupied by the liquid injection hole 21 on the end cover 20. If the angle α is too large, the liquid injection hole may occupy too much space on the end cover and affect other components on the end cover. If the angle α is too small, it is not conducive to the installation and location of the second seal nail 40.

In some embodiments, the second seal nail 40 includes a plate-shaped cover 41, and the circumferential contour of the plate-shaped cover 41 has a third inclined surface 42 that fits with the inner wall of the first hole segment 211. The second seal nail 40 is located and fixed in the first hole segment 211 through the third inclined surface 42 fitting with the inner wall of the first hole segment 211, which is conducive to stability during welding, and effectively reduces the installation difficulty.

In some embodiments, the angle α satisfies: 95°≤α≤120°, optionally, α=110°. The second seal nail 40 may be conveniently installed and located in the first hole segment 211 by defining an appropriate angle α, and the space on the end cover occupied by the liquid injection hole 21 may be reduced.

In FIG. 4 and FIG. 5, the second seal nail 40 includes a plate-shaped cover 41, the plate-shaped cover 41 and the first hole segment 211 are welded at the butting positions 44 of the plate-shaped cover 41 and the first hole segment 211, and the plate-shaped cover 41 has a groove 43 adjacent to the butting position 44.

The plate-shaped cover 41 is substantially flush with the hole edge part of the first hole segment 211 on the end cover 20, so as to obtain a more regular surface of the end cover and make the end cover more artistic. The groove 43 adjacent to the butting position 44 can be deformed during welding, and serves as a stress relief structure on the second seal nail 40 to release the stress caused by welding.

In FIG. 5, the difference between the thickness of the plate-shaped cover 41 corresponding to the groove 43 and the thickness of other parts of the plate-shaped cover 41 is -0.2 mm to 0.2 mm, so that the heat transfer is more uniform due to a uniform thickness, and the second seal nail is not easy to melt due to local overheating.

For the circular plate-shaped cover 41 and the first hole segment 211 with a circular cross-section, the butting position between the plate-shaped cover 41 and the first hole cover 211 is circular. Correspondingly, the weld seam between the plate-shaped cover 41 and the first hole segment 211 is circular, and the groove 43 is located inside of the weld seam and is circular. The circular weld seam may achieve a better sealing effect, and the circular groove 43 adjacent to the circular weld seam may more evenly relieve the stress from the welding.

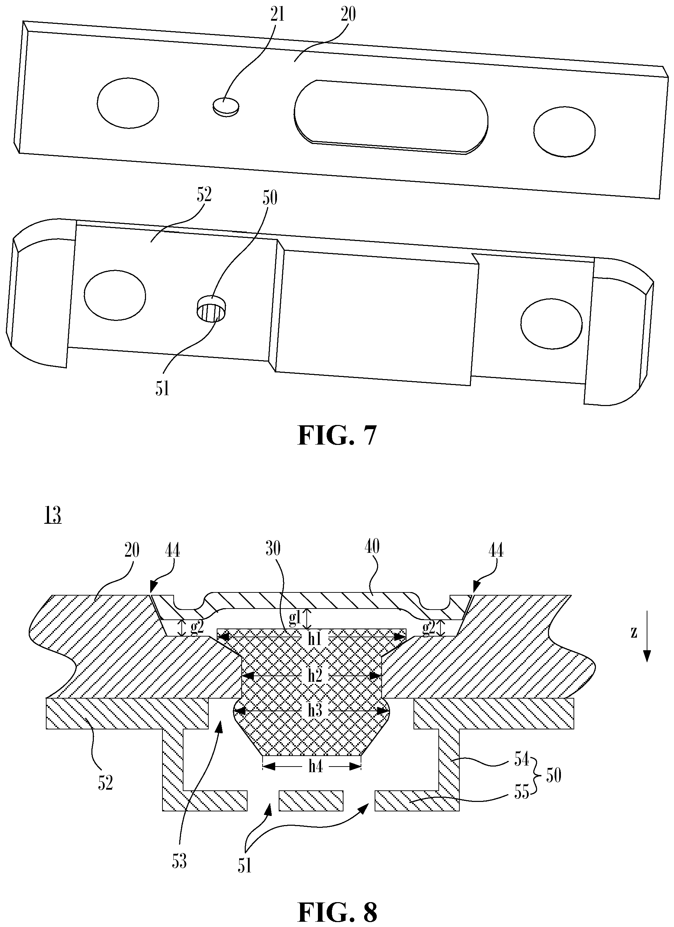

FIG. 6 is a cross-sectional schematic view of the installation structure of a battery end cover assembly according to other embodiments of the present disclosure. FIG. 7 is an exploded schematic view of a battery end cover assembly according to still other embodiments of the present disclosure. FIG. 8 is a cross-sectional schematic view of FIG. 7. Referring to FIGs. 6-8, compared with the foregoing embodiments, in some embodiments, the battery end cover assembly 13 further includes a protective enclosure 50. The protective enclosure 50 covers one end of the second hole segment 212 far from the first hole segment 211, and has a first through hole 51. The first through hole 51 may be a round hole, or a rectangular hole or a through hole of other shapes.

Under negative pressure, the electrolyte solution first enters the protective enclosure 50 from the liquid injection hole 21, and then enters the interior of a battery cell 10 through the first through hole 51 in the protective enclosure 50. The protective enclosure 50 can buffer the electrolyte solution injected through the liquid injection hole 21, thereby preventing the electrolyte solution from quickly entering the interior of the battery cell 10 and causing impact on an electrode assembly 12, reducing the risk of damage to the electrode assembly during liquid injection, and improving the safety of the production process.

Referring to FIG. 6, in some embodiments, the protective enclosure 50 is fixedly connected to a surface of a side of the end cover 20 far from the first hole segment 211. For example, the protective enclosure 50 is bonded to the end cover 20. Such structure may occupy less space of the battery cell, so that a larger-sized electrode assembly may be used to increase the capacity.

Referring to FIG. 7 and FIG. 8, in some embodiment, the battery end cover assembly 13 further includes an insulating plate 52. The insulating plate 52 is located on the front side of the end cover 20 along the first direction z, and has a second through hole 53 that at least partly coincides with the second hole segment 212. The protective enclosure 50 is fixedly connected to or integrally formed with the insulating plate 52, and is located on a surface of a side of the insulating plate 52 far from the first hole segment 211.

The insulating plate 52 can isolate the top cover from tabs of the electrode assembly 12, thereby avoiding problems such as electric leakage caused by the tabs being directly electrically connected to the end cover 20. For a protective enclosure 50 and an insulating plate 52 that are integrally formed, they may be made of the same insulating material, so as to facilitate molding and processing. In addition, the integrally formed structure can ensure the connection strength, so as to prevent the protective enclosure 50 from being collided by the electrode assembly 12 and causing connection failure between the protective enclosure 50 and the insulating plate 52.

In FIGs. 6-8, the protective enclosure 50 may include a surrounding edge 54 and a bottom plate 55, and the surrounding edge 54 and the bottom plate 55 together enclose a space below the liquid injection hole 21 (that is, a space on a side of the second hole segment 212 far from the first hole segment 211). The protective enclosure 50 may be arranged coaxially with the liquid injection hole, the bottom plate 55 is opposite to the second hole segment 212 of the liquid injection hole 21, and the surrounding edge 54 is connected to the side edge of the bottom plate 55. The space may accommodate at least a part of the third segment 33 of the first seal nail 30, so that a protection space for the third segment 33 of the first seal nail 30 is formed by the protective enclosure 50, and the first seal nail 30 is prevented from passing through the liquid injection hole 21 and entering the interior of the battery cell 10.

The bottom plate 55 may have a plurality of first through holes 51, which can allow the electrolyte solution to enter the electrode assembly dispersedly under negative pressure, thereby reducing the impact on the electrode assembly and allowing the electrolyte solution to enter the electrode assembly 12 more smoothly.

Based on the embodiments of the battery end cover assembly described above in the present disclosure, an embodiment of the present disclosure further provides a battery cell, including the aforementioned battery end cover assembly. The battery cell using the aforementioned electrode assembly may obtain better safety performance.

In one aspect of the present disclosure, a battery, including the aforementioned battery cell, is provided. The battery using the aforementioned battery cell may obtain better safety performance.

In one aspect of the present disclosure, an electrical device is provided, including the aforementioned battery. The electrical device using the aforementioned battery may obtain better safety performance.

Although the present disclosure has been described with reference to the preferred embodiments, many improvements can be made thereto and components thereof can be replaced with equivalents without departing from the scope of the present disclosure. In particular, the technical features mentioned in the embodiments can be combined in any manner as long as there is no structural conflict. The present disclosure is not limited to the particular embodiments disclosed herein, and includes all technical solutions falling within the scope of the claims.

## Claims

1. A battery end cover assembly (13), comprising:
an end cover (20) having a liquid injection hole (21) penetrating along a first direction (z), wherein the liquid injection hole (21) comprises a first hole segment (211) and a second hole segment (212) divided along the first direction (z); the cross-sectional area of the first hole segment (211) is larger than the cross-sectional area of the second hole segment (212); a stepped surface (213) is formed between the first hole segment (211) and the second hole segment (212); and the stepped surface (213) comprises a first inclined surface (213a) inclined toward the second hole segment (212) along the first direction (z).

2. The battery end cover assembly (13) according to claim 1, wherein the first inclined surface (213a) is a truncated conical surface.

3. The battery end cover assembly (13) according to claim 2, wherein the height of the first inclined surface (213a) in the first direction (z) is L, the projection of the first inclined surface (213a) on a plane perpendicular to the first direction (z) is a circular ring, the radial width of the circular ring is D, and the height L and the radial width D satisfy: 0.2≤D/L≤35.

4. The battery end cover assembly (13) according to claim 3, wherein the height L and the radial width D satisfy: 0.5≤D/L≤3.5.

5. The battery end cover assembly (13) according to claim 3, wherein the stepped surface (213) further comprises a planar segment (213b) perpendicular to the first direction (z), and the planar segment (213b) is on the outer side of the first inclined surface (213a) far from the second hole segment (212).

6. The battery end cover assembly (13) according to claim 5, wherein the area defined by the inner edge of the planar segment (213b) is configured to be larger than the area of a liquid outlet of a liquid injection nozzle, and the liquid injection nozzle is the liquid injection nozzle of a liquid injection device for injecting liquid into the liquid injection hole (21).

7. The battery end cover assembly (13) according to any one of claims 1-6, further comprising:
a first seal nail (30) that is at least partly located in the second hole segment (212), and fits with the second hole segment (212) in a sealed manner.

8. The battery end cover assembly (13) according to claim 7, wherein the first seal nail (30) comprises a first segment (31) and a second segment (32) divided along the first direction (z); the second segment (32) fits with the second hole segment (212) in a sealed manner; the maximum cross-sectional area of the first segment (31) is larger than the cross-sectional area of the second hole segment (212); and the first segment (31) has a second inclined surface (311) which is capable of closely fitting with the first inclined surface (213a).

9. The battery end cover assembly (13) according to claim 8, wherein the first seal nail (30) further comprises a third segment (33) that is connected along the first direction (z) to a side of the second segment (32) far from the first segment (31), and the maximum cross-sectional area of the third segment (33) is larger than the cross-sectional area of the second hole segment (212).

10. The battery end cover assembly (13) according to claim 9, wherein the third segment (33) has a drum-shaped part (331) adjacent to the second segment (32), and the maximum cross-sectional area of the third segment (33) is the maximum cross-sectional area of the drum-shaped part (331).

11. The battery end cover assembly (13) according to claim 10, wherein the third segment (33) further comprises a conical or truncated conical part (332) on the drum-shaped part (331) far from the second segment (32), and the cross-sectional area of the conical or truncated conical part (332) gradually decreases along the first direction (z).

12. The battery end cover assembly (13) according to claim 9, wherein the cross-sectional area of the second hole segment (212) is larger than the cross-sectional area of an end surface on a side of the third segment (33) far from the second segment (32).

13. The battery end cover assembly (13) according to claim 12, wherein the cross-sectional area of the second hole segment (212) is 1.05-1.5 times the cross-sectional area of the end surface on the side of the third segment (33) far from the second segment (32).

14. The battery end cover assembly (13) according to claim 11, wherein the angle β between the generatrix of the conical or truncated conical part (332) and a plane perpendicular to the first direction (z) satisfies: 30°≤β≤50°.

15. The battery end cover assembly (13) according to claim 7, further comprising:
a second seal nail (40) that is at least partly located in the first hole segment (211), and fits with the first hole segment (211) in a sealed manner.

16. The battery end cover assembly (13) according to claim 15, wherein a first gap (g1) is formed between an end surface on a side of the first seal nail (30) adjacent to the second seal nail (40) and the second seal nail (40).

17. The battery end cover assembly (13) according to claim 16, wherein the value of the first gap (g1) is 0.3-0.6 mm.

18. The battery end cover assembly (13) according to claim 16, wherein a second gap (g2) is formed between the stepped surface (213) and the second seal nail (40).

19. The battery end cover assembly (13) according to claim 18, wherein the value of the second gap (g2) is 0.1-0.4 mm.

20. The battery end cover assembly (13) according to claim 7, wherein the material of the first seal nail (30) comprises rubber.

21. The battery end cover assembly (13) according to claim 15, wherein the material of the second seal nail (40) comprises metal.

22. The battery end cover assembly (13) according to any one of claims 1-6, wherein the angle α between the inner wall of the first hole segment (211) and a plane perpendicular to the first direction (z) satisfies: 90°≤α≤130°.

23. The battery end cover assembly (13) according to claim 22, further comprising:
a second seal nail (40) that is at least partly located in the first hole segment (211), and fits with the first hole segment (211) in a sealed manner;
wherein the second seal nail (40) comprises a plate-shaped cover (41); and the circumferential contour of the plate-shaped cover (41) has a third inclined surface (42) that fits with the inner wall of the first hole segment (211).

24. The battery end cover assembly (13) according to claim 22, wherein the angle α satisfies: 95°≤α≤120°.

25. The battery end cover assembly (13) according to any one of claims 1-6, further comprising:
a second seal nail (40) that is at least partly located in the first hole segment (211), and fits with the first hole segment (211) in a sealed manner;
wherein the second seal nail (40) comprises a plate-shaped cover (41); the plate-shaped cover (41) and the first hole segment (211) are welded at the butting positions of the plate-shaped cover (41) and the first hole segment (211); and the plate-shaped cover (41) has a groove (43) adjacent to the butting position.

26. The battery end cover assembly (13) according to claim 25, wherein the weld seam between the plate-shaped cover (41) and the first hole segment (211) is circular, and the groove (43) is located inside of the weld seam and is circular.

27. The battery end cover assembly (13) according to any one of claims 1-6, further comprising:
a protective enclosure (50) covering one end of the second hole segment (212) far from the first hole segment (211), and having a first through hole (51).

28. The battery end cover assembly (13) according to claim 27, wherein the protective enclosure (50) is fixedly connected to a surface of a side of the end cover (20) far from the first hole segment (211).

29. The battery end cover assembly (13) according to claim 27, further comprising:
an insulating plate (52) located on the front side of the end cover (20) along the first direction (z) and having a second through hole (53) that at least partly coincides with the second hole segment (212); and
wherein the protective enclosure (50) is fixedly connected to or integrally formed with the insulating plate (52), and is located on a surface of a side of the insulating plate (52) far from the first hole segment (211).

30. The battery end cover assembly (13) according to claim 27, wherein the protective enclosure (50) comprises a surrounding edge (54) and a bottom plate (55), the surrounding edge (54) and the bottom plate (55) together enclose a space on a side of the second hole segment (212) far from the first hole segment (211), and the bottom plate (55) has a plurality of first through holes (51).

31. A battery cell (10), comprising:
a case (11) having a cavity and an end opening (111) communicated with the cavity;
an electrode assembly (12), located in the cavity; and
the battery end cover assembly (13) according to claims 1-30, arranged at the end opening (111).

32. A battery (60), comprising the battery cell (10) according to claim 31.

33. An electrical device, comprising the battery (60) according to claim 32.
